# EUROPEAN PATENT APPLICATION

(11) **EP 4 177 321 A1**
(43) Date of publication of application: **10.05.2023**
(21) Application number: 21833533.9
(22) Date of filing: 30.06.2021
(51) Int. Cl.: C09J 11/08, C09J 153/02, G09F 3/04, G09F 3/10, C09J 7/38

(54) **LABEL**

(30) Priority: 02.07.2020 JP 2020115114
(71) Applicant: LINTEC CORPORATION, Itabashi-ku Tokyo 173-0001 (JP); Il Pharma Packaging Co., Ltd., Ichinomiya-shi, Aichi 491-0804 (JP)
(72) Inventor: IKEGAMI, Daisuke, Tokyo 173-0001 (JP); AMANO, Yasuyuki, Tokyo 173-0001 (JP); TANAKA, Atsuhiro, Tokyo 173-0001 (JP); ANDO, Mizuki, Ichinomiya-shi, Aichi 491-0804 (JP)
(74) Representative: J A Kemp LLP
(86) International application number: PCT/JP2021/024793
(87) International publication number: WO 2022/004800

(57) **Abstract**

The present invention provides a label having excellent barrier property and transparency, wherein contamination of the container and adhesive residue due to the residual monomer in the adhesive layer are suppressed. The label is a label that is used for shrink-wrapping a container body of a resin container by wrapping around a barrel of the container body and heat-shrinking the shrinkable label, wherein the label comprises at least one heat shrinkable base material, a transparent vapor-deposited film consisting of an inorganic oxide, and an adhesive layer, and the adhesive layer comprises an adhesive composition comprising a triblock copolymer having a block structure of segment A1-segment B-segment A2.

## Description

### TECHNICAL FIELD

The present invention relates to a label. In particular, the present invention relates to a heat shrinkable label for the purpose of low contamination, which is preferably used for a pharmaceutical, a food, etc.

### BACKGROUND ART

Conventionally, heat shrinkable labels are widely used for containers made of glass, synthetic resin, etc. for foods, drinks, cosmetics, pharmaceuticals, etc., because heat shrinkable labels can wrap the containers with complicated shapes while maintaining high adhesion to the containers.

When wrapping a container by using a heat shrinkable label, generally the peripheral side surface of the container is shrink-wrapped by wrapping the shrinkable label around the peripheral side surface of the container to form a cylindrical label having a junctional region where the left and right ends of the heat shrinkable label are overlapped, and heat-shrinking the shrinkable label from the outside of the tubular label. In addition, a heat shrinkable label is known, wherein the cylindrical heat shrinkable film is heat-shrinked from the top of the container closed with a cap to the cap, to be tightly attached to the top of the container and the cap, and seal the cap part. The heat shrinkable label is used for the purpose of preventing the risk that the cap part gets dirty during transportation or display, or the content is tampered by opening the cap during the distribution process, and for guaranteeing virgin seal property. The heat shrinkable label used for such shrink wrapping may have a desired printing such as letters and patterns on the surface thereof.

In recent years, containers for storing medicines or foods have changed from conventional glass containers to resin containers. When a heat shrinkable label printed with desired printing such as letters and patterns on the surface thereof is used to such resin containers, there is a concern that impurities such as low molecular weight components contained in the ink of the print layer permeate through the resin container and contaminate the contents.

Patent Literature 1 describes a pressure sensitive adhesive sheet for an indication label, comprising a barrier base material having gas barrier properties to water vapor and oxygen, and a pressure sensitive adhesive layer, the pressure sensitive adhesive layer comprising an extruded product of a pressure sensitive adhesive composition that contains a thermoplastic elastomer.

Patent Literature 2 describes a resin sheet comprising a barrier film and a shrink film, the barrier film having gas barrier properties to water vapor and oxygen, the shrink film having heat shrinkability, the barrier film and the shrink film being laminated via an adhesive layer, the barrier film comprising a material that contains an ethylene-vinyl alcohol based copolymer, the barrier film constituting at least one of outermost layers of the resin sheet.

### CITATION LIST

### PATENT LITERATURE

Patent Literature 1: JP 2018-159027
Patent Literature 2: JP 2018-089800

### SUMMARY OF THE INVENTION

### TECHNICAL PROBLEM

In a field such as pharmaceuticals, the demand for quality control is extremely high. A label for shrink wrapping a resin container is required to have properties including tamper-proof property (virgin seal property) and prevention of the contents in the resin containers from being contaminated by the ink components of the print layer, and further in addition prevention of the contents in the resin containers from being contaminated by a binding agent such as a hot melt binding agent and an adhesive used to adhere the label to the resin container, and transparency for confirming contamination into the container and deterioration of the contents.

No conventional labels meet all these requirements.

The present invention has been made in view of the above problems. The object of the present invention is to provide a label having excellent barrier property and transparency, wherein contamination of the container and adhesive residue due to the residual monomer in the adhesive layer are suppressed.

### SOLUTION TO THE PROBLEM

In view of the above problems, the inventors of the present invention have earnestly conducted research. As a result, the inventors has found that the above problems can be solved by providing a transparent vapor-deposited film consisting of an inorganic oxide on the adhesive layer and making a triblock copolymer be contained in the adhesive composition used for the adhesive layer. Thus, the inventors have accomplished the present invention. Specifically, the present invention is as follows.
(1) The first embodiment of the present invention is a label that is used for shrink-wrapping a container body of a resin container by wrapping around a barrel of the container body and heat-shrinking the shrinkable label, wherein the label comprises at least one heat shrinkable base material, a transparent vapor-deposited film consisting of an inorganic oxide, and an adhesive layer, and the adhesive layer comprises an adhesive composition comprising a triblock copolymer having a block structure of segment A1-segment B-segment A2.
(2) The second embodiment of the present invention is a label that is used for sealing and shrink-wrapping a container body of a resin container and a lid detachably attached to a take-out port of the container body, by wrapping astride the container body of the resin container and the lid in the circumferential direction of the resin container, and heat-shrinking the shrinkable label, wherein the label comprises at least one heat shrinkable base material, a transparent vapor-deposited film consisting of an inorganic oxide, and an adhesive layer, and the adhesive layer comprises an adhesive composition comprising a triblock copolymer having a block structure of segment A1-segment B-segment A2.
(3) The third embodiment of the present invention is the label according to (1) or (2), wherein the label wrapped around a barrel of the container body or the label wrapped in the circumferential direction of the resin container, is adhered to the entire surface by the adhesive layer.
(4) The fourth embodiment of the present invention is the label according to any one of (1) to (3), wherein in the triblock copolymer, both the glass transition temperatures (Tg) of the segments A1 and A2 are 90 °C or more, and the glass transition temperature (Tg) of the segment B is -40 °C or less.
(5) The fifth embodiment of the present invention is the label according to any one of (1) to (4), wherein the triblock copolymer comprises one or more selected from the group consisting of a styrene-based triblock copolymer, a hydrogenated product thereof, and an acrylic-based triblock copolymer.
(6) The sixth embodiment of the present invention is the label according to any one of (1) to (5), wherein in the label, the transparent vapor-deposited film and the heat shrinkable base material are sequentially laminated on the adhesive layer, and a print layer is provided on the surface opposite to the surface of the heat shrinkable base material in contact with the transparent vapor-deposited film.
(7) The seventh embodiment of the present invention is the label according to any one of (1) to (6), wherein the thickness of the transparent vapor-deposited film is 1 nm or more and 1,000 nm or less.
(8) The eighth embodiment of the present invention is the label according to any one of (1) to (7), wherein the adhesive composition comprises one or more tackifier selected from the group consisting of a rosin-based resin, a terpene-based resin, a styrene-based resin, and a hydrocarbon-based resin, and the content of the tackifier is 1 part by mass or more and 200 parts by mass or less with respect to 100 parts by mass of the triblock copolymer.
(9) The ninth embodiment of the present invention is the label according to any one of (1) to (8), wherein the adhesive composition does not contain a plasticizer.

### ADVANTAGEOUS EFFECTS OF THE INVENTION

The present invention can provide a label having excellent barrier property and transparency, wherein contamination of the container and adhesive residue due to the residual monomer in the adhesive layer are suppressed.

### BRIEF DESCRIPTION OF THE DRAWINGS

FIG. 1(a) is a perspective view of a container in which the label of the present invention is used. FIG. 1(b) is a perspective view of a container in which the label of another embodiment of the present invention is used.
FIG. 2(a) is a side view of another embodiment of a container in which the label of the present invention is used. FIG. 2(b) is a side view of another embodiment of a container in which the label of another embodiment of the present invention is used.
FIG. 3 shows a cross section of the label of the present invention.

### DESCRIPTION OF THE INVENTION

Hereinafter, embodiments for carrying out the present invention (hereinafter referred to as embodiments) are described in detail. However, these are explained for the purpose of illustrative examples, and the present invention is not limited thereto.

### < Label >

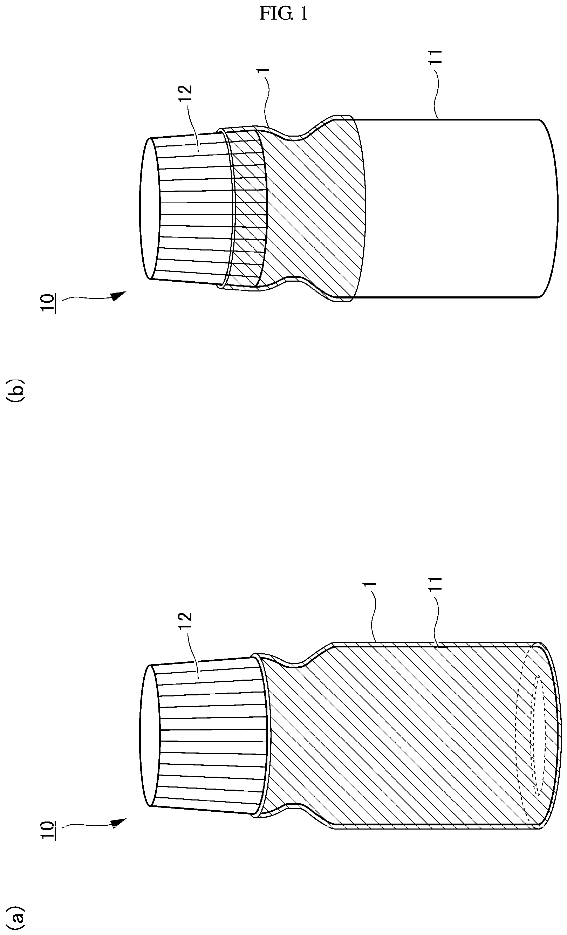

FIG. 1(a) is a perspective view of a container in which the label of the present invention is used. The label 1 of the present invention is used for shrink-wrapping the container body 11 of the resin container 10 by wrapping around the barrel of the container body 11 and heat-shrinking the shrinkable label. Thereby, contamination of the container body 11 can be prevented during transportation or display.

Further, as shown in FIG. 1(b), another embodiment of the present invention is the label 1 that is used for sealing and shrink-wrapping the container body 11 of the resin container 10 and the lid 12 detachably attached to the take-out port of the container body 11, by wrapping astride the container body 11 of the resin container 10 and the lid 12 in the circumferential direction of the resin container 10, and heat-shrinking the shrinkable label. Thereby, the lid 12 of the resin container 10 cannot be opened without removing the label 1, and thus, the lid 12 is prevented from being opened during the distribution process, etc. of the resin container 10, and tampering of the content is prevented. In addition, it also functions to prevent contamination of the lid 12 during transportation or display.

The label 1 may be provided with a separation line (not shown in FIGs.) such as a perforation or a half-cut groove, if necessary. By providing the separation line, the label 1 can be easily and cleanly separated from the container body 11 or the resin container 10, to be opened.

Further, it is preferable that the label 1 is wrapped around a barrel of the container body 11 or in the circumferential direction of the resin container 10, and is adhered to the entire surface by the adhesive layer 40 described later. Thereby, the label 1 may not be easily peeled off in the distribution process of the resin container 10, and can have excellent tamper-proof property (virgin seal property). Further, in the part adhered to the adhesive layer 40, heat shrinkage is suppressed, cracks are less likely to occur in the transparent vapor-deposited film 30 described later, and excellent barrier property and transparency are maintained even after heat shrinkage. If necessary, a part of the surface of the adhesive layer 40 may be treated with glue exclusion such as a printing varnish or the like. Thereby, when the label 1 is peeled off from the container body 11 or the resin container 10, the label 1 can be easily peeled off, because the exfoliation starting point is formed.

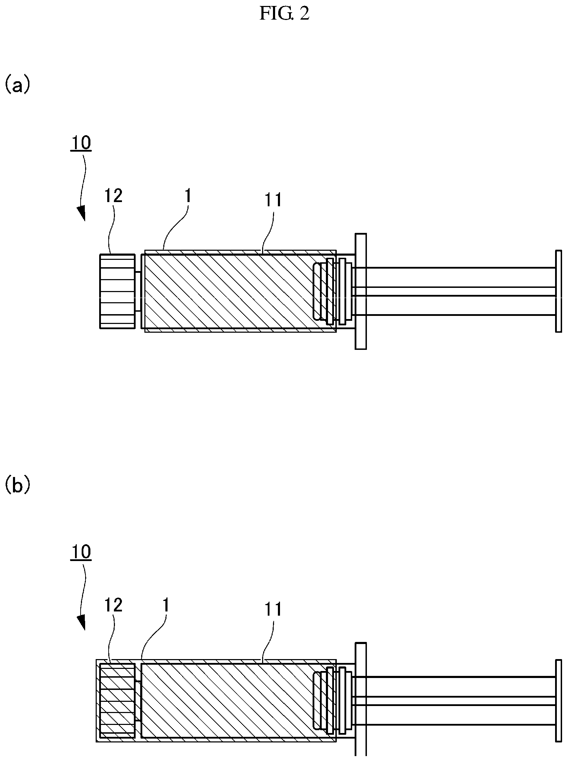

Further, similarly in the case of the syringe-type resin container 10 of the syringe as shown in FIGs. 2(a) and 2(b), the label 1 of the present invention is wrapped around a barrel of the container body 11 of the resin container 10, or is wrapped astride the container body 11 of the resin container 10 and the lid 12 detachably attached to a take-out port of the container body 11 in the circumferential direction of the resin container 10. Both are used for shrink-wrapping.

As shown in FIGs. 1(b) and 2(b), the label 1 may be shrink-wrapped as the label 1 covers a part or all of the take-out port of the container body 11 of the resin container 10., in order to make it easier to open the label 1.

The resin container 10 is not particularly limited, and examples thereof include containers for foods, drinks, cosmetics, pharmaceuticals, etc. The label 1 of the present invention is suitably used for shrink-wrapping the container body 11 or the container body 11 and the lid 12 for medicines such as eye drops, nasal drops and prefilled syringes whose quality control is particularly strict.

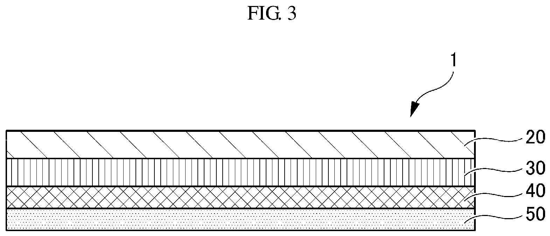

FIG. 3 shows a cross section of the label of the present invention The label 1 of the present invention comprises at least one heat shrinkable base material 20, a transparent vapor-deposited film 30 consisting of an inorganic oxide, and an adhesive layer 40. Further, in the label 1 of the present invention, the transparent vapor-deposited film 30 and the heat shrinkable base material 20 are sequentially laminated on the adhesive layer 40, and preferably a print layer (not shown in FIGs.) is provided on the surface opposite to the surface of the heat shrinkable base material 20 in contact with the transparent vapor-deposited film 30. Since the label 1 of the present invention is provided with the transparent vapor-deposited film 30 consisting of an inorganic oxide, contamination of the contents of the resin container 10 by the ink component of the print layer (not shown in FIGs.) can be prevented.

### ( Heat shrinkable base material)

The material of the heat shrinkable base material 20 used for the label 1 of the present invention is not particularly limited as long as the label 1 can exhibit heat-shrinkability, and a film generally used as a film for shrink wrapping can be used. The material of the heat shrinkable base material 20 may include, for example, at least one of a polyester-based resin, a polystyrene-based resin, a polyolefin-based resin, a polyvinyl chloride-based resin and the like. In particular, the heat shrinkable base material 20 is preferably made of a material comprising at least one of a polyester-based resin, a polystyrene-based resin and a polyolefin-based resin from the viewpoint of easily exhibiting a desired heat-shrinkability. The heat shrinkable base material 20 is more preferably made of a material comprising a polyester-based resin such as a polyethylene terephthalate because the thermal expansion coefficient of the heat shrinkable base material 20 is small, and the heat shrinkable base material 20 has excellent dimensional stability, and is suitable for a printed label or the like.

The heat shrinkable base material 20 may be a single layer or a multilayer.

In the label 1 of the present invention, the thickness of the heat shrinkable base material 20 is preferably 10 µm or more, more preferably 20 µm or more. The thickness of the heat shrinkable base material 20 is preferably 80 µm or less, more preferably 60 µm or less. When the thickness of the heat shrinkable base material 20 is within the above numerical range, the label 1 can easily exhibit the desired heat-shrinkability.

### ( Transparent vapor-deposited film )

The transparent vapor-deposited film 30 consisting of an inorganic oxide, is formed on at least one surface of the heat shrinkable base material 20.

The inorganic oxide used for the transparent vapor-deposited film 30 includes silicon oxide, aluminum oxide, magnesium oxide, zinc oxide, indium oxide, tin oxide and the like. Among them, silicon oxide and aluminum oxide are preferable, and aluminum oxide is more preferable from the point of cost and versatility. By using the inorganic oxide, the transparent vapor-deposited film 30 can have high transparency and barrier property, and the label 1 can have excellent barrier property and transparency. The transparent vapor-deposited film 30 may be a single layer or a multilayer. Further, the transparent vapor-deposited film 30 may be laminated with a film made of an inorganic nitride such as silicon nitride or a film made of an inorganic oxynitride such as silicon oxynitride and aluminum oxynitride.

The method of forming the transparent vapor-deposited film 30 is not particularly limited, and examples thereof include a method of forming the above mentioned inorganic oxide on a base material by a vacuum vapor deposition method, a sputtering method, an ion plating method, a thermal CVD method, a plasma CVD method, or the like. The transparent vapor-deposited film 30 may be formed on the peelable base material in advance and transferred to the heat shrinkable base material 20. As the method of forming the transparent vapor-deposited film 30, a method of depositing an inorganic oxide by direct evaporation may be used, but a method of reactive vapor deposition under an oxidizing atmosphere is more preferable from the viewpoint of productivity. In order to generate the oxidizing atmosphere, a required amount of oxygen gas alone or a gas obtained by diluting oxygen gas with an inert gas may be introduced into a vacuum vapor deposition apparatus. The inert gas refers to a rare gas such as argon and helium, nitrogen gas, or a mixed gas thereof. The reactive vapor deposition is performed in a way that a metal or an inorganic oxide is vaporized from an evaporation source under the oxidizing atmosphere, and an oxidation reaction occurs in the vicinity of the heat shrinkable base material 20 to form the transparent vapor-deposited film 30 on the heat shrinkable base material 20. The transparent vapor-deposited film 30 consisting of an inorganic oxide is most preferably a complete oxide. However, in general, when attempting to form a complete oxide, there is a high probability that an excessively oxidized part is formed, the gas barrier property of the excessively oxidized part is inferior, and it is difficult to obtain high gas barrier property as a whole. Therefore, the transparent vapor-deposited film 30 may be an incomplete oxide film in which some metal components remain.

As an example, a method of forming the transparent vapor-deposited film 30 consisting of aluminum oxide on the heat shrinkable base material 20 is explained below. The heat shrinkable base material 20 is set in a vacuum vapor deposition apparatus equipped with a film traveling device and traveled via a cooling metal drum. At this time, while the aluminum is heated and evaporated, the evaporated metal vapor is used for vapor deposition. Alternatively, oxygen gas is supplied to a part where the metal vapor is present, and the aluminum is coagulated and deposited on the heat shrinkable base material 20 while being oxidized to form a transparent vapor-deposited film 30 consisting of aluminum oxide and wound up. By changing the ratio between the amount of the evaporated aluminum and the amount of oxygen gas supplied at this time, the transparency of the transparent vapor-deposited film 30 can be changed. After the vapor deposition, the inside pressure of the vacuum vapor deposition apparatus is returned to normal pressure, and the transparent vapor-deposited film 30 is wound up. After that, the transparent vapor-deposited film 30 is preferably subjected to an aging treatment by leaving the transparent vapor-deposited film 30 at a predetermined temperature under atmospheric pressure for a predetermined period of time, whereby the barrier property and transparency are stabilized. The aging treatment is preferably performed at a temperature of 30 °C or more and less than 50 °C for one day or longer under atmospheric pressure, more preferably at a temperature of 30 °C or more and less than 45 °C for one day or more, in order to avoid deterioration of the physical properties of the transparent vapor-deposited film 30 due to heat shrinkage of the heat shrinkable base material 20.

In the label 1 of the present invention, the thickness of the transparent vapor-deposited film 30 is preferably 1 nm or more, more preferably 5 nm or more, and further preferably 10 nm or more. The thickness of the transparent vapor-deposited film 30 is preferably 1,000 nm or less, more preferably 500 nm or less, and even more preferably 200 nm or less. In the case that the thickness of the transparent vapor-deposited film 30 is 1 nm or more, the label 1 exhibits excellent barrier property, and when a print layer exists on the surface of the heat shrinkable base material 20, intrusion of the ink component of the print layer into the resin container 10 can be prevented, and contamination of the contents of the resin container 10 can be prevented. Further, when the thickness of the transparent vapor-deposited film 30 is 1,000 nm or less, it can be suppressed that the label 1 becomes excessively thick, and even when the heat shrinkable base material 20 is heat-shrinked, the transparent vapor-deposited film 30 is less likely to crack, and the transparency of the transparent vapor-deposited film 30 is maintained while maintaining excellent barrier property.

### (Adhesive layer )

In the label 1 of the present invention, the adhesive layer 40 is a layer formed from an adhesive composition comprising a triblock copolymer having a block structure of segment A1-segment B-segment A2.

The adhesive layer 40 may be formed by using a method of coating a solution formed by dissolving the adhesive composition in a solvent using a bar coater, a roll coater, a die coater, a comma coater or the like, and removing the solvent by drying (solution casting method). Alternatively, the adhesive layer 40 may be formed by heating and melting the adhesive composition using a hot melt coating method, a T-die method, an inflation method, a calendar forming method, a lamination method or the like.

As the above-mentioned triblock copolymer, for example, a styrene-based triblock copolymer, a hydrogenated product thereof, or an acrylic-based triblock copolymer may be used. Only one kind of the triblock copolymers may be used, or two or more kinds may be used. But, among them, the triblock copolymer preferably includes one or more selected from the group consisting of the styrene-based triblock copolymer, the hydrogenated product thereof, and the acrylic-based triblock copolymer.

The styrene-based triblock copolymer and the hydrogenated product thereof are preferably styrene-butadiene-styrene copolymer (SBS), styrene-isoprene-styrene copolymer (SIS), or styrene-ethylene-butylene copolymer / styrene copolymer (SEBS).

Further, the acrylic triblock copolymer preferably has a segment A1 and a segment A2 both of which are composed of a methacrylate unit, and a segment B composed of an acrylate unit. Methacrylates of the constituent units of the segments A1 and A2, include methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate, benzyl methacrylate, methoxyethyl methacrylate, ethoxyethyl methacrylate, diethylaminoethyl methacrylate, 2-hydroxyethyl methacrylate, 2-aminoethyl methacrylate, glycidyl methacrylate, tetrahydrofurfuryl methacrylate and the like. These methacrylates may be used alone or in combination of two or more. Among these, the methacrylate of the constituent units of the segments A1 and A2, is more preferably methyl methacrylate, ethyl methacrylate, tert-butyl methacrylate, cyclohexyl methacrylate, isobornyl methacrylate or phenyl methacrylate, from the viewpoint of the transparency of the obtained adhesive layer 40 and the heat resistance of the same when the heat shrinkable base material 20 is heat-shrinked.

Acrylates of the constituent unit of the segment B of the acrylic triblock copolymer, include butyl acrylate, isobutyl acrylate, sec-butyl acrylate, tert-butyl acrylate, amyl acrylate, isoamyl acrylate, hexyl acrylate, cyclohexyl acrylate, phenyl acrylate, methoxyethyl acrylate, ethoxyethyl acrylate, diethylaminoethyl acrylate, 2-hydroxyethyl acrylate, 2-aminoethyl acrylate, glycidyl acrylate, tetrahydrofurfuryl acrylate, 2-ethylhexyl acrylate, n-octyl acrylate, isooctyl acrylate, decyl acrylate, isobornyl acrylate, lauryl acrylate, benzyl acrylate, phenoxyethyl acrylate and the like. These acrylates may be used alone or in combination of two or more. Among these, the acrylate of the constituent unit of the segment B, is more preferably acrylates such as butyl acrylate, isobutyl acrylate and octyl acrylate from the viewpoint of improving the adhesive properties of the obtained adhesive layer 40. These acrylates may be used alone or in combination of two or more.

Further, in the above triblock copolymer having the block structure of segment A1-segment B-segment A2, it is preferable that both the glass transition temperatures (Tg) of the segments A1 and A2 are 90 °C or more, and the glass transition temperature (Tg) of the segment B is -40 °C or less. When the glass transition temperatures (Tg) of these segments are respectively within the above numerical ranges, the adhesive properties of the adhesive layer 40 may be controlled within the most suitable range.

The polystyrene conversion weight average molecular weight (Mw) of the acrylic triblock copolymer is preferably 50,000 or more and 1,000,000 or less, more preferably 60,000 or more and 500,000 or less, and further preferably 70,000 or more and 450,000. The polystyrene conversion weight average molecular weight (Mw) of the styrene-based triblock copolymer or the hydrogenated product thereof is preferably 10,000 or more and 500,000 or less, more preferably 20,000 or more and 400,000 or less, and further preferably 30,000 or more and 300,000 or less. Thereby, the adhesive layer 40 has an appropriate tack, exhibits high adhesive strength to the resin container 10, and is less likely to generate adhesive residue when the label 1 of the present invention is peeled off. Therefore, the label 1 of the present invention has good handleability. In the present specification, a value of polystyrene conversion weight average molecular weight (Mw) means a value measured as a standard polystyrene conversion value by gel permeation chromatography (GPC) using tetrahydrofuran (THF) as a solvent. Specifically, the measurement is performed using a GPC measuring apparatus ("HLC-8220GPC" manufactured by Tosoh Corporation) under the following condition:
Column: TSKgel GMHXL -> TSKgel GMHXL -> TSKgel 2000HXL
Injection amount: 80 µl
Measurement temperature: 40 °C
Flow velocity: 1 ml / min
Detector: Differential refractometer
Sample concentration: 1% (w/v)

The adhesive composition may further contain a component other than the above-mentioned triblock copolymer. The other component includes a tackifier, a coupling agent, a filler, a softener, a plasticizer, a surfactant, an antioxidant, a heat stabilizer, a light stabilizer, a UV absorber, a colorant, a defoamer, a flame retardant, an antistatic agent, or the like. In particular, the adhesive composition preferably contains a tackifier. The tackifier preferably includes, for example, one or more selected from the group consisting of a rosin-based resin, a terpene-based resin, a styrene-based resin, and a hydrocarbon-based resin. A hydrogenated resin obtained by hydrogenating these resins may be used as the tackifier. The content of the tackifier is preferably 1 part by mass or more and 200 parts by mass or less, more preferably 10 parts by mass or more and 180 parts by mass or less, with respect to 100 parts by mass of the triblock copolymer from the viewpoint of the adhesive strength, tack and cohesive force of the adhesive layer 40.

In the present specification, the tackifier is a component that supplementarily improves the adhesive strength of the adhesive layer 40, and is an oligomer having a mass average molecular weight (Mw) of usually less than 10,000, and is distinct from the above-mentioned triblock copolymers. The adhesive layer 40 formed from the adhesive composition comprising the tackifier together with the above-mentioned triblock copolymer, can exhibit high adhesive strength to the container body 11 of the resin container 10.

Further, it is preferable that the adhesive composition does not contain a plasticizer. By not containing a plasticizer, there is no bleeding of the plasticizer from the adhesive layer 40 to the resin container 10, contamination of the contents of the resin container 10 can be prevented, and the adhesive layer 40 having excellent transparency can be obtained.

The thickness of the adhesive layer 40 is preferably 5 µm or more, more preferably 10 µm or more, and further preferably 15 µm or more. The thickness is preferably 100 µm or less, more preferably 80 µm or less, and further preferably 70 µm or less. When the thickness of the adhesive layer 40 is 5 µm or more, the label 1 can easily exhibit excellent adhesiveness to the resin container 10. Further, when the thickness of the adhesive layer 40 is 100 µm or less, shrink wrapping can be performed without hindering the heat shrinkage of the heat shrinkable base material 20. In addition, transfer of the components from the adhesive layer 40 to the resin container 10 can be further reduced, and contamination of the resin container 10 when the label 1 is used can be effectively suppressed.

The label 1 of the present invention preferably has a total light transmittance (value measured in accordance with the Japanese Industrial Standards: JIS K7361-1: 1997) of 80% or more, and more preferably 90% or more. When the total light transmittance is 80% or more, the transparency is high, and the deterioration of the contents of the resin container 10 can be confirmed through the label 1, even in the state where the resin container 10 is shrink-wrapped. Such total light transmittance can be easily achieved by using a vapor-deposited film of silicon oxide or aluminum oxide as the transparent vapor-deposited film 30 consisting of an inorganic oxide.

### ( Release sheet)

In the label 1 of the present invention, as shown in FIG. 3, a release sheet 50 may be laminated on the adhesive surface of the adhesive layer 40, for the purpose of protecting the adhesive surface until the adhesive surface is attached to the resin container 10. The constitution of the release sheet 50 is arbitrary, and examples thereof include a plastic film subjected with peeling treatment with a release agent or the like. Specific examples of the plastic film include polyester films such as polyethylene terephthalate, polybutylene terephthalate and polyethylene naphthalate, and polyolefin films such as polypropylene and polyethylene. As the release agent, a silicone type, a fluorine type, a long chain alkyl type or the like can be used. Among these, preferable is a silicone type which can provide stable performance at a low cost.

The present invention has been described above explaining the embodiments. However, the technical scope of the present invention is not limited to the scope described in the above embodiments and examples. It is apparent to a person skilled in the art that various modifications or improvements may be added to the above embodiments. In addition, it is also clear from the description of the claims that the forms with the above modifications or improvements may be included in the technical scope of the present invention.

### REFERENCE SIGNS LIST

- 1: Label
- 10: Resin container
- 11: Container body
- 12: Lid
- 20: Heat shrinkable base material
- 30: Transparent vapor-deposited film
- 40: Adhesive layer
- 50: Release sheet

## Claims

1. A label that is used for shrink-wrapping a container body of a resin container by wrapping around a barrel of the container body and heat-shrinking the shrinkable label,
wherein the label comprises at least one heat shrinkable base material, a transparent vapor-deposited film consisting of an inorganic oxide, and an adhesive layer, and
the adhesive layer comprises an adhesive composition comprising a triblock copolymer having a block structure of segment A 1-segment B-segment A2.

2. A label that is used for sealing and shrink-wrapping a container body of a resin container and a lid detachably attached to a take-out port of the container body, by wrapping astride the container body of the resin container and the lid in the circumferential direction of the resin container, and heat-shrinking the shrinkable label,
wherein the label comprises at least one heat shrinkable base material, a transparent vapor-deposited film consisting of an inorganic oxide, and an adhesive layer, and
the adhesive layer comprises an adhesive composition comprising a triblock copolymer having a block structure of segment A 1-segment B-segment A2.

3. The label according to claim 1 or 2, wherein the label wrapped around a barrel of the container body or the label wrapped in the circumferential direction of the resin container, is adhered to the entire surface by the adhesive layer.

4. The label according to any one of claims 1 to 3, wherein in the triblock copolymer, both the glass transition temperatures (Tg) of the segments A1 and A2 are 90 °C or more, and the glass transition temperature (Tg) of the segment B is -40 °C or less.

5. The label according to any one of claims 1 to 4, wherein the triblock copolymer comprises one or more selected from the group consisting of a styrene-based triblock copolymer, a hydrogenated product thereof, and an acrylic-based triblock copolymer.

6. The label according to any one of claims 1 to 5, wherein in the label, the transparent vapor-deposited film and the heat shrinkable base material are sequentially laminated on the adhesive layer, and
a print layer is provided on the surface opposite to the surface of the heat shrinkable base material in contact with the transparent vapor-deposited film.

7. The label according to any one of claims 1 to 6, wherein the thickness of the transparent vapor-deposited film is 1 nm or more and 1,000 nm or less.

8. The label according to any one of claims 1 to 7, wherein the adhesive composition comprises one or more tackifier selected from the group consisting of a rosin-based resin, a terpene-based resin, a styrene-based resin, and a hydrocarbon-based resin, and
the content of the tackifier is 1 part by mass or more and 200 parts by mass or less with respect to 100 parts by mass of the triblock copolymer.

9. The label according to any one of claims 1 to 8, wherein the adhesive composition does not contain a plasticizer.
